# EUROPÄISCHE PATENTSCHRIFT

(11) **EP 3 798 489 B1**
(45) Veröffentlichungstag und Bekanntmachung des Hinweises auf die Patenterteilung: **23.08.2023**
(21) Anmeldenummer: 19306243.7
(22) Anmeldetag: 30.09.2019
(51) Int. Cl.: F16L 25/00, F16L 37/00, H02G 3/06

(54) **ANSCHLUSSARMATUR ZUR LÖSBAREN BEFESTIGUNG EINES ROHRES ODER SCHLAUCHS**
CONNECTION FITTING FOR THE DETACHABLE FASTENING OF A PIPE OR HOSE
RACCORD POUR LA FIXATION AMOVIBLE D'UN TUYAU OU D'UN TUBE

(43) Veröffentlichungstag der Anmeldung: 31.03.2021
(73) Patentinhaber: Nexans, 92400 Courbevoie (FR)
(72) Erfinder: HUSCHER, Rainer, 92685 FLOSS (DE); SCHNEIDER, Thomas, 92685 FLOSS (DE); SCHRÖER, Frank, 92685 FLOSS (DE)
(74) Vertreter: Ipsilon

(56) Entgegenhaltungen:
- EP-A1- 1 953 885
- EP-A1- 2 083 203
- DE-A1- 19 923 636
- DE-A1-102015 104 422
- DE-A1-102015 118 546
- DE-U1- 9 406 382

## Beschreibung

### Gebiet

Die Erfindung betrifft eine Anschlussarmatur für die Durch- bzw. Einführung von in Rohren verlegten Leitungen von Feuchträumen in Trockenräume, bzw. zwischen voneinander getrennten Räumen mit unterschiedlichen Umweltbedingungen.

### Hintergrund

Für eine gedichtete Durchführung von mehradrigen Leitungen durch eine Wand, die Räume mit unterschiedlichen Umweltbedingungen voneinander trennt wird üblicherweise eine Mantelleitung genutzt. Für die Dichtung an der Durchführung, bspw. bei einem Übergang von einen Feuchtraum in einen Trockenrau, wird üblicherweise eine Tülle verwendet, die an der Mantelleitung montiert oder daran angespritzt ist. Weder die Mantelleitung noch die Tülle sind üblicherweise gegenüber starker mechanischer Beanspruchung robust genug, wie sie bspw. in Land- und Luftfahrzeugen auftreten, oder in bzw. an Maschinen, die starken Vibrationen ausgesetzt sind oder diese erzeugen. Zudem kann der Verbau solcher Leitungen in Fahrzeugen und Maschinen schwierig zu überwachen sein, insbesondere die Einhaltung von Mindestbiegeradien und die sichere Befestigung am Einbauort.

Wenn in einer Einbausituation die Einzelleiter nach der Durchführung separat geführt werden müssen, und für eine Vereinzelung innerhalb eines Raumes, der vor dem Eindringen von Fluiden aus einem Außenraum geschützt werden soll, nur wenig Raum zur Verfügung steht, kann eine Mantelleitung nicht problemlos genutzt werden. Wenn dann noch zusätzlich die Einzelleiter über größere Entfernungen geführt und dafür über größere Längen abgemantelt werden müssen, kann dies bei der Vorbereitung und der Verarbeitung zu zusätzlichen prozess- und handhabungstechnischen Problemen führen.

Bei bestimmten Anwendungen kann es vorkommen, dass mehrere Einzelleitungen zwischen zwei geschützten Bereichen durch einen Bereich geführt werden, in den Gase, Feuchtigkeit, Staub oder Festkörper eindringen können. Solche Bereiche können auch eine von einem geschützten Bereich abgesetzt montierte Anschlussbox umfassen, von welcher dort ankommende oder abgehende Leitungen in den geschützten Bereich geführt werden. Die Verlegung einer Vielzahl von Einzelleitungen durch den ungeschützten Bereich ist einerseits aufwendig, andererseits müssen die Einzelleitungen besonders widerstandsfähig sein, was die Verwendung besonderer Leitungen erfordert.

Unter anderem aus den vorstehend genannten Gründen werden häufig Einzelleitungen in Kabelführungen gemeinsam verlegt, wobei die Kabelführungen den Schutz der Einzelleitungen übernehmen. Außerdem muss so nur eine einzige Kabelführung verlegt werden, wodurch sich der Montageaufwand verringert. Kabelführungen sind bspw. Wellrohre bzw. Wellschläuche. Wellrohre oder Wellschläuche sind Rohre oder Schläuche aus einem starren Material mit wellenförmig wechselndem Durchmesser. Aufgrund der Wellung ergibt sich eine Flexibilität, welche die Handhabung und Verlegung vereinfacht und z.B. Kurvenstücke überflüssig machen kann. Wellrohre können bspw. aus Metall oder Kunststoffen bestehen, z.B. PP, PP-mod, PA oder dergleichen. Wellrohre aus Metall oder metallisierten Kunststoffen können bei Bedarf eine elektromagnetische Abschirmung bereitstellen.

Bei der Nutzung von Kabelführungen, bspw. Rohren oder Wellrohren, entfällt die Abdichtung der Einzelleitungen an der Durchführungsstelle, wenn die Kabelführung selbst keine Stelle aufweist, an der ein Fluid oder Festkörper eindringen kann.

Der fluiddichte, lösbare Anschluss von Kabelführungen, insbesondere von Schläuchen, Rohren oder Wellrohren, an eine Durchführung in ein Gehäuse erfordert in der Regel aufwendig konstruierte und zu handhabende Anschlüsse, insbesondere wegen des bei Wellrohren bzw. Wellschläuchen wechselnden Durchmessers.

Die EP 2 083 203 A1 zeigt eine Rohrverschraubung für Metallwellrohre mit einem Einschraubnippel zur Verbindung der Rohrverschraubung mit weiteren Rohrleitungselementen, einem Klemmring zum Einklemmen des Metallwellrohres und einer Überwurfmutter. Der Klemmring kann aus einem verformbaren Kunststoff bestehen. Bei der Montage wird der Klemmring durch einen Innenkonus axial und radial verformt, sodass Teile des Klemmrings in Wellen des Metallwellrohres gedrückt werden und so eine Dichtung bilden.

Die DE 199 23 636 A1 zeigt eine Verschraubung für die Aufnahme und Klemmverbindung von Schutzschläuchen, insbesondere Wellschläuchen, mit einem rohrförmigen Anschlussstück. Das Anschlussstück weist an einem Ende ein Außengewinde und am Umfang verteilt achsparallele Federn auf. Auf das Außengewinde kann eine Schraubkappe aufgesetzt werden, die an ihrem Schlaucheinführungsende innen mit einer ringförmigen Schrägfläche versehen ist. Die Schrägfläche drückt die Federn beim Aufschrauben der Schraubkappe radial nach innen gegen den Schlauch, so dass ein den Schlauch umgebender Dichtring radial gegen das Wellrohr gedrückt wird.

Hiervon ausgehend hat die vorliegende Erfindung die Aufgabe, eine Anschlussarmatur zu schaffen, die eines oder mehrere der eingangs genannten Probleme zu überwindet oder zumindest verbessert.

### Zusammenfassung der Erfindung

Zur Lösung dieser Aufgabe schlägt die Erfindung eine Anschlussarmatur, mit den Merkmalen des unabhängigen Anspruchs 1, zur lösbaren Befestigung eines Rohres oder Schlauchs mit zumindest in einem in der Anschlussarmatur aufgenommenen Endbereich wellenförmig wechselndem Durchmesser vor, die einen elastisch verformbaren, sich axial über zwei oder mehr Wellen des Endbereichs erstreckenden Dichtkörper aufweist, durch welchen der Endbereich des Rohres oder Schlauches hindurchsteckbar ist, so dass der in der Anschlussarmatur aufgenommene Endbereich von dem Dichtkörper radial umschlossen ist. Die Anschlussarmatur weist außerdem einen Anschlussstutzen mit einem von einer Wand umschlossenen Kernhohlraum, einer Einstecköffnung zur Aufnahme eines Endes des Rohres oder Schlauchs und des über den Endbereich des Rohres oder Schlauchs geschobenen Dichtkörpers, sowie eine der Einstecköffnung gegenüberliegende Durchlassöffnung auf. Die Anschlussarmatur weist ferner einen den Anschlussstutzen außen übergreifenden und an dem Anschlussstutzen in einer Montageendlage fixierbaren Klemmkörper auf. Der Klemmkörper weist einen in einer quer zu einer Längsachse eines in dem Anschlussstutzen aufgenommenen Rohres oder Schlauchs liegenden Bereich mit einer Öffnung auf, durch die das Rohr oder der Schlauch durchgeführt ist, und der zumindest einen Teil des den Schlauch radial umschlossenen Dichtkörpers im montierten bzw. fixierten Zustand in axialer Richtung staucht und/oder komprimiert. Dabei können Teile des Dichtkörpers in den Raum zwischen Wellenbergen des Dichtkörpers eindringen und einen Formschluss bilden.

Die Fixierung des Klemmkörpers an dem Anschlussstutzen kann bspw. mittels miteinander verrastender Bereiche von Anschlussstutzen und Klemmkörper erfolgen. Alternativ kann der Klemmkörper auf den Anschlussstutzen aufgeschraubt werden, wobei für eine schnelle Montage ein an beiden Teilen segmentweise unterbrochenes Gewinde genutzt werden kann. Bei einer Befestigung mit einem segmentweise unterbrochenen Gewinde sind in einer ersten Position ein Gewindesegment des einen Teils und ein gewindeloses Segment des anderen Teils zueinander ausgerichtet, so dass der Klemmkörper quer zu den Gewindegängen auf den Anschlussstutzen aufgeschoben werden kann. In einer nahe der Montageendlage liegenden Lage wird dann der Klemmkörper mit einer Drehbewegung aufgeschraubt und durch das Gewinde weiter angezogen. Um ein selbsttätiges Lösen des Klemmkörpers zu verhindern können zusätzliche Sicherungsmittel vorgesehen sein. In einer anderen Alternative sind am Klemmkörper und an dem Anschlussstutzen ineinandergreifende Nocken und Schlitze eines Bajonettverschlusses vorgesehen. Dabei kann am in der Montageendlage des Klemmkörpers eine Verriegelung vorgesehen sein, die die durch das Stauchen und/oder Komprimieren des Dichtkörpers erzeugte Kraft nutzt, um ein selbsttätiges Lösen des Klemmkörpers zu verhindern, bspw. durch eine entsprechende Führung des oder der Schlitze des Bajonettverschlusses. Der Klemmkörper kann auch mit einer Spange oder Klammer an dem Anschlussstutzen fixiert werden.

Der Dichtkörper kann eine allgemein zylindrische Form aufweisen, die den Raum zwischen der Innenseite der den Kernhohlraum umschließenden Wand und der Außenseite eines darin aufgenommenen Rohres oder Schlauchs weitgehend ausfüllt. Der Dichtkörper kann dabei unter elastischer Spannung zumindest an dem Rohr oder Schlauch anliegen, wobei der Dichtkörper auch unter elastischer Spannung an der Innenseite des Anschlussstutzens anliegen kann.

Der Dichtkörper kann aus einem elastisch verformbaren Material bestehen, das zudem vorzugsweise gegenüber einer Vielzahl von gasförmigen und/oder flüssigen Medien unempfindlich ist.

Der Dichtkörper weist an einer von dem Ende des Rohres oder Schlauchs abgewandten Seite einen radial umlaufenden, nach außen weisenden Kragen auf. Der Durchmesser des Kragens ist dabei größer als der Innendurchmesser des Anschlussstutzens, so dass der Dichtkörper nicht weiter als bis zu seinem Kragen in den Anschlussstutzen eingeführt werden kann.

Bei einer oder mehreren Ausgestaltungen der Anschlussarmatur weist der Dichtkörper zumindest auf seiner Innenseite mit den Wellen des Rohres oder Schlauchs korrespondierende, radial umlaufende flexible Stege oder Lamellen auf. Die Stege oder Lamellen können dabei an den "Wellenbergen" oder in den zwischen zwei "Wellenbergen" liegenden "Tälern" abdichtend anliegen. Bei einer axialen Verschiebung des Dichtkörpers gegenüber dem Rohr oder Schlauch folgen die Stege oder Lamellen dem sich ändernden Durchmesser der "Wellenberge" und "Täler" und behalten die abdichtende Wirkung bei.

Bei einer oder mehreren Ausgestaltungen der Anschlussarmatur weist der Dichtkörper auf seiner Außenseite radial umlaufende Stege oder Lamellen auf, die im montierten Zustand abdichtend an der Innenseite des Anschlussstutzens anliegen.

Ausgestaltungen mit Stegen und/oder Lamellen auf der Außen- und der Innenseite des Dichtkörpers sind ebenfalls möglich. Dabei können die Stege oder Lamellen auf der Innenseite des Dichtkörpers gegenüber den Stegen oder Lamellen auf der Außenseite versetzt angeordnet sein.

Die Stege oder Lamellen stellen mehrere in axialer Richtung des Dichtkörpers hintereinander angeordnete, voneinander weitgehend unabhängige Dichtebenen bereit.

Bei einer oder mehreren Ausgestaltungen der Anschlussarmatur weist der Dichtkörper zumindest über einen Teil seiner axialen Länge wellenförmig wechselnde Durchmesser auf, ähnlich wie ein Faltenbalg oder eine Ziehharmonika. Dadurch kann sich der Dichtkörper leichter an den Raum zwischen der Innenwand des Anschlussstutzens und der Außenwand des Rohres oder Schlauchs anpassen, und ähnlich wie mit den Stegen oder Lamellen eine Reihe von hintereinander angeordneten Dichtebenen bereitstellen. Wenn der Dichtkörper axial gestaucht wird, kann er sich leichter verformen, und Bereiche des Dichtkörpers können sich leichter an die wellenförmige Außenseite des Rohres oder Schlauchs anpassen.

Der Dichtkörper kann an den Schlauch bzw. das Rohr angespritzt oder auf den Schlauch bzw. das Rohr aufschiebbar sein. Bei einem angespritzten Dichtkörper ist vorzugsweise ein Kragen vorgesehen, der an der Stirnseite des Anschlussstutzens anliegt und von dem Klemmkörper komprimiert wird.

Bei einer oder mehreren Ausgestaltungen der Anschlussarmatur weist der Anschlussstutzen einen im Bereich der Durchlassöffnung innen umlaufenden Anschlag auf, an dem zumindest der das in dem Anschlussstutzen aufgenommene Rohr oder den Schlauch umschließende Dichtkörper anstößt. Dadurch kann ein Durchdrücken des Dichtkörpers durch die Durchlassöffnung verhindert werden. Der Anschlag kann auch so gestaltet sein, dass das in dem Anschlussstutzen aufgenommene Rohr oder der Schlauch daran anstoßen, so dass auch dessen Endlage in Einsteckrichtung festgelegt ist. Der verbleibende Durchmesser der Durchlassöffnung entspricht vorzugsweise mindestens dem kleinsten Durchmesser des in dem Anschlussstutzen aufgenommenen Rohres oder Schlauchs. Der Anschlag kann auch durch eine eingelegte Lochscheibe an unterschiedliche Rohr- bzw. Schlauchdurchmesser und entsprechende Dichtkörper mit unterschiedlichen Wanddicken angepasst werden

Bei einer oder mehreren Ausgestaltungen der Anschlussarmatur, bei denen der Anschlussstutzen einen innen umlaufenden Anschlag aufweist, ist der Dichtkörper in einem ungestauchten Zustand länger als der Abstand zwischen dem Anschlag und dem an der Einstecköffnung liegenden Ende des Anschlussstutzens. Bei dieser Ausgestaltung wird der Dichtkörper von dem Klemmkörper in montiertem Zustand axial gestaucht. Dabei besteht der Dichtkörper vorzugsweise aus einem Material, das sich bei der Stauchung wenigstens zum Beginn der Stauchung im Wesentlichen volumengleich elastisch verformt, so dass das Volumen des Dichtkörpers bei der Verformung zunächst weitgehend unverändert bleibt. Bei der Verformung werden Bereiche des Dichtkörpers in freie Bereiche zwischen der Innenwand des Anschlussstutzens und der Außenwand des darin aufgenommenen Rohres oder Schlauchs verdrängt, so dass zumindest bereichsweise eine formschlüssige Dichtung entsteht, die auch ein Herausziehen des Rohres oder Schlauchs aus der Anschlussarmatur ver- oder zumindest behindert. Eine Volumenänderung des Dichtkörpers bei einer weiteren Verformung, nachdem die freien Bereiche bereits ausgefüllt sind, kann hingenommen werden. Der Dichtkörper kann bspw. aus einem geschlossenporigen Schaumstoff bestehen. Auch ein zuvor beschriebener faltenbalgähnlicher Dichtkörper, dessen Länge größer ist als der Abstand zwischen dem Anschlag und dem an der Einstecköffnung liegenden Ende der Wand kann durch die Verformung bei der axialen Stauchung die Abdichtung zwischen der Innenwand des Anschlussstutzens und der Außenwand des darin aufgenommenen Rohres oder Schlauchs bewirken, wobei einzelne Falten durch die Stauchung in zwischen zwei Wellenbergen liegende Täler des Rohrs oder Schlauchs eingreifen können.

Bei einer oder mehreren Ausgestaltungen der Anschlussarmatur weist der Klemmkörper zwei oder mehr entlang des Umfangs des Anschlussstutzens gleichmäßig verteilte Schenkel auf, welche den Anschlussstutzen übergreifen, und welche an dem Anschlussstutzen fixierbar sind, oder an einem Gehäuseteil an dem der Anschlussstutzen angeordnet ist.

Bei einer oder mehreren Ausgestaltungen der Anschlussarmatur weist der Klemmkörper ein innen liegendes Gewinde auf, das mit einem Außengewinde des Anschlussstutzens korrespondiert.

Bei einer oder mehreren Ausgestaltungen der Anschlussarmatur weist der Klemmkörper an seiner Stirnseite, einen von dem Anschlussstutzen weg weisenden Stutzen auf, über den der Schlauch eingeführt und durch den Klemmkörper hindurch geführt ist, und der als Knickschutz für den Schlauch dient. Der Stutzen bzw. Knickschutz kann aus demselben Material wie der Klemmkörper bestehen oder aus einem weicheren Material, das mit dem Klemmkörper verbunden ist, bspw. angeklebt, verschweißt oder angespritzt.

Bei einer oder mehreren Ausgestaltungen der Anschlussarmatur ist an dem quer zu einer Längsachse des in dem Anschlussstutzen aufgenommenen Rohres oder Schlauchs liegenden Bereich des Klemmkörpers im Inneren eine Lochscheibe frei drehbar angeordnet. Durch die Lochscheibe, deren Außendurchmesser mit dem Außendurchmesser des Anschlussstutzens korrespondiert, ist das Rohr oder der Schlauch hindurchgeführt. Dazu weist die Lochscheibe ein Loch mit einem Durchmesser auf, der mit dem Außendurchmesser des durch die Lochscheibe hindurchgeführten Rohres oder Schlauchs korrespondiert. Vorzugsweise bleibt zwischen der Außenwand des Rohres oder Schlauchs und dem Rand des Lochs kein oder nur ein minimaler Spalt. Die Lochscheibe kann in den Klemmkörper eingelegt sein und dort mit geringem Spiel axial fixiert sein, oder frei über den Schlauch geschoben werden. Die Lochscheibe kann bspw. dazu genutzt werden, einen Klemmkörper mit einer Durchstecköffnung eines bestimmten Durchmessers für Rohre oder Schläuche mit kleinerem Außendurchmesser anzupassen. Dies ist insbesondere dann vorteilhaft, wenn der Dichtkörper axial gestaucht werden muss. Die Verwendung von Lochscheibe kann die Zahl von für unterschiedliche Rohr- oder Schlauchdurchmesser herzustellenden Anschlussstutzen und Klemmkörpern reduzieren; es müssen dann zusätzlich zu den an den Schlauchdurchmesser angepassten Lochscheiben lediglich entsprechende Dichtkörper verwendet werden, welche den Raum zwischen der Innenwand des Anschlussstutzens und der Außenwand des darin aufgenommenen Rohres oder Schlauchs passend ausfüllen.

Die Lochscheibe kann bei einem Klemmkörper, der mittels Gewinde an dem Anschlussstutzen fixiert wird, dazu beitragen, dass der Dichtkörper bei der Montage nicht oder nur wenig verdreht wird. Hierzu kann die Lochscheibe aus einem Material bestehen oder mit einem Material beschichtet sein, das einen geringeren Reibwiderstandskoeffizienten aufweist als das Material des Klemmkörpers und/oder des Dichtkörpers, bspw. PTFE.

Bei einer oder mehreren Ausgestaltungen der Anschlussarmatur ist im Inneren des Anschlussstutzens ein weiterer, an beiden Enden offener Stutzen angeordnet, der in einem in der Anschlussarmatur aufgenommenen Rohr oder Schlauch aufgenommen ist bzw. über den das das in der Anschlussarmatur aufgenommene Rohr oder der Schlauch gesteckt ist. Der innere Stutzen kann das in dem Anschlussstutzen aufgenommene Rohr oder den Schlauch radial verstärken, so dass ein aufgrund axialer Verformung gegen die Außenseite drückender Dichtkörper das Rohr oder den Schlauch nicht zusammendrückt. Außerdem kann bei ungleichmäßiger Verformung des Dichtkörpers das in dem Anschlussstutzen aufgenommene Rohr oder der Schlauch nicht seitlich gegenüber der Durchlassöffnung versetzt werden.

Durch das Stauchen bzw. Komprimieren verformt sich der Dichtkörper und formt sich an die Wellenberge und -täler des Wellrohrs an. Gleichzeitig wird die äußere Seite des Dichtkörpers gegen die Innenwand des Anschlussstutzens gedrückt. Die Oberseite des Klemmkörpers verhindert ein Herausziehen des Dichtkörpers aus dem Anschlussstutzen. Durch den Formschluss des Dichtkörpers mit dem Wellrohr, den Reibschluss des Dichtkörpers mit dem Anschlussstutzen und die Blockierung des Dichtkörpers durch den Klemmkörper wird das Wellrohr gegen unbeabsichtigtes Herausziehen aus dem Anschlussstutzen gesichert, so dass weitere Fixierungsmaßnahmen entfallen können. Die Fixierung kann durch einen zwischen Klemmteil und Stirnseite des Anschlussstutzens eingeklemmten Kragen weiter verbessert werden. Auch bei den Ausführungen mit in die Wellentäler des Wellrohrs eingreifenden Stegen oder Lamellen des Dichtkörpers bzw. bei in die Wellentäler eingreifenden Bereichen des ziehharmonikaartigen Dichtkörpers ist die Fixierung des Wellrohrs auf der Innenseite des Dichtkörpers durch einen zumindest teilweisen Formschluss und des Dichtkörpers auf der Außenseite durch Reibschluss sowie durch die Blockierung des Dichtkörpers durch den Klemmkörper gegeben.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: ein in einem Beispiel einer nicht erfindungsgemäßen Anschlussarmatur aufgenommenes Wellrohr vor der Fixierung des Klemmkörpers in einer Schnittdarstellung,
- Fig. 2: das in dem Beispiel einer nicht erfindungsgemäßen Anschlussarmatur aufgenommene Wellrohr nach der Fixierung des Klemmkörpers in einer Schnittdarstellung,
- Fig. 3: ein in einem zweiten Beispiel einer nicht erfindungsgemäßen Anschlussarmatur aufgenommenes Wellrohr vor der Fixierung des Klemmkörpers in einer Schnittdarstellung,
- Fig. 4: ein in einer Ausgestaltung der erfindungsgemäßen Anschlussarmatur aufgenommenes Wellrohr vor der Fixierung des Klemmkörpers in einer Schnittdarstellung,
- Fig. 5: ein in einer zweiten Ausgestaltung der erfindungsgemäßen Anschlussarmatur aufgenommenes Wellrohr vor der Fixierung des Klemmkörpers in einer Schnittdarstellung,
- Fig. 6: ein in einer dritten Ausgestaltung der erfindungsgemäßen Anschlussarmatur aufgenommenes Wellrohr vor der Fixierung des Klemmkörpers in einer Schnittdarstellung,
- Fig. 7: ein in einer vierten Ausgestaltung der erfindungsgemäßen Anschlussarmatur aufgenommenes Wellrohr vor der Fixierung des Klemmkörpers in einer Schnittdarstellung,
- Fig. 8: ein in einer fünften Ausgestaltung der erfindungsgemäßen Anschlussarmatur aufgenommenes Wellrohr vor der Fixierung des Klemmkörpers in einer Schnittdarstellung,
- Fig. 9: ein in einem dritten Beispiel einer nicht erfindungsgemäßen Anschlussarmatur aufgenommenes Wellrohr vor der Fixierung des Klemmkörpers in einer Schnittdarstellung, und
- Fig. 10: ein in einem vierten Beispiel einer nicht erfindungsgemäßen Anschlussarmatur aufgenommenes Wellrohr vor der Fixierung des Klemmkörpers in einer Schnittdarstellung.

Gleiche oder ähnliche Elemente sind in den Figuren mit gleichen oder ähnlichen Bezugszeichen versehen.

### Ausführungsbeispiel

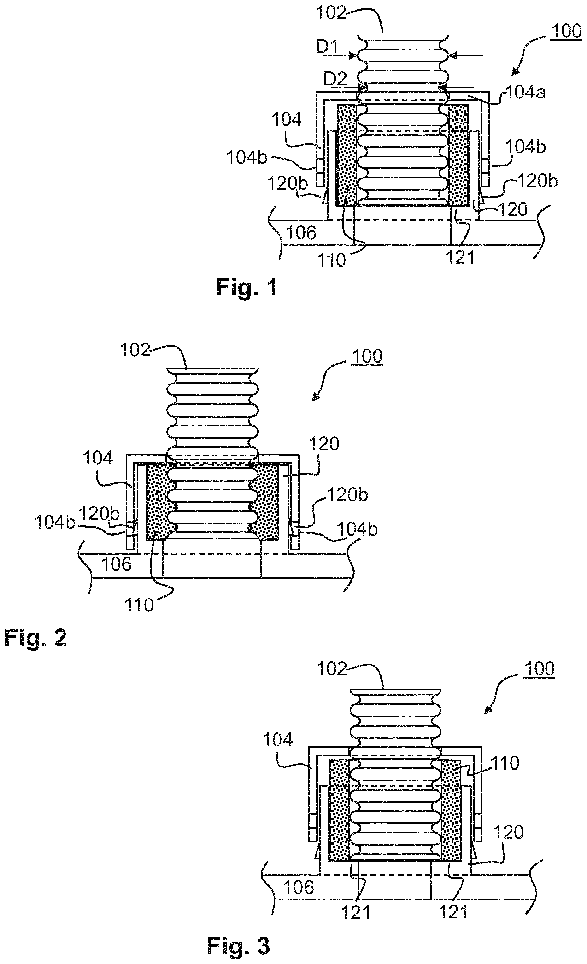

Figur 1 zeigt ein in einem ersten Beispiel einer nicht erfindungsgemäßen Anschlussarmatur 100 aufgenommenes Wellrohr 102 vor der Fixierung des Klemmkörpers 104 in einer Schnittdarstellung. Die Anschlussarmatur 100 ist an einer in der Figur angedeuteten Gehäusewand 106 angeordnet, bspw. daran angeformt. Die Anschlussarmatur 100 kann selbstverständlich auch als separates Teil gefertigt und mit einem Gehäuse in bekannter Weise verbunden sein. Anschlussarmatur 100 umfasst einen Anschlussstutzen, in dem das Wellrohr 102 und der darüber geschobene Dichtkörper 110 aufgenommen sind. Der Dichtkörper 110 hat dabei vorzugsweise eine Dicke, die zumindest den Raum zwischen der Innenwand des Anschlussstutzens 120 und dem größten Außendurchmesser des Wellrohrs ausfüllt. Der Dichtkörper 110 kann dabei auch unter elastischer Spannung an den Bereichen von dem Wellrohr 102 mit dem größten Außendurchmesser anliegen. In den "Tälern" des Wellrohrs, also in den Bereichen mit kleinerem Außendurchmesser verbleiben freie Bereiche. Das Wellrohr 102 ist durch eine Stirnseite 104a des Klemmkörpers hindurchgeführt, die dazu eine Öffnung aufweist. Der Durchmesser der Öffnung ist vorzugsweise nur wenig größer als der größte Durchmesser des Wellrohrs 102, so dass der Dichtkörper bei der Stauchung oder Kompression nicht oder nur wenig zwischen dem Klemmkörper und dem Wellrohr herausquellen kann. Der Klemmkörper 104 weist Öffnungen 104b auf, die in einer Montageendlage nach erfolgter Montage mit Rastnasen 120b des Anschlussstutzens verrasten und den Klemmkörper so fixieren. Mehrere Öffnungen 104b und Rastnasen 120b können entlang des Umfangs des Klemmkörpers 104 und des Anschlussstutzens 120 verteilt sein, vorzugsweise gleichmäßig. Anstelle der Öffnung kann auch eine innen in dem Klemmkörper umlaufende Nut vorgesehen sein, so dass auf eine exakte Ausrichtung des Klemmkörpers verzichtet werden kann. Der Anschlussstutzen 120 weist einen innen umlaufenden Anschlag 121 auf, gegen den Dichtkörper 110 gepresst wird, wenn der Klemmkörper in Richtung Gehäusewand 106 gedrückt wird.

Figur 2 zeigt das in dem ersten Beispiel einer nicht erfindungsgemäßen Anschlussarmatur 100 aufgenommene Wellrohr 102 nach der Fixierung des Klemmkörpers 104 an dem Anschlussstutzen 120 in einer Schnittdarstellung. In der Figur ist gut zu erkennen, wie der Dichtkörper 110 sich durch die Stauchung bzw. das Zusammendrücken verformt hat und in die freien Bereiche hineingeformt hat, die zuvor von den "Tälern" des Wellrohrs, also den Bereichen mit kleinerem Außendurchmesser gebildet waren. Der Dichtkörper 110 ist dabei gegen den Anschlag 121 gepresst worden. Das Wellrohr 102 kann bei der Montage ebenfalls geringfügig seine axiale Position verändern, weil es nicht mit dem Anschlag 121 in Kontakt steht; dies ist in der Figur aus Gründen der Übersichtlichkeit nicht dargestellt. Die Öffnungen 104b des Klemmkörpers 104 liegen über den Rastnasen 120b des Anschlussstutzens 120 und verhindern, dass der Klemmkörper sich wieder in seine Ausgangslage verlagert.

Die in die Wellentäler des Wellrohrs hineingeformten Bereiche des Dichtkörpers, der an der Oberseite des Klemmkörpers anliegt, bewirken eine Fixierung des Wellrohrs in dem Anschlussstutzen, die ein unbeabsichtigtes Herausziehen des Wellrohrs verhindern.

Figur 3 zeigt ein in ein zweites Beispiel einer nicht erfindungsgemäßen Anschlussarmatur 100 aufgenommenes Wellrohr 102 vor der Fixierung des Klemmkörpers 104 in einer Schnittdarstellung. In der in Figur 3 gezeigten Ausgestaltung der Anschlussarmatur 100 stößt das Wellrohr 102 ebenfalls an den Anschlag 121 an, so dass es seine axiale Lage zumindest in eine Montagerichtung nicht über den Anschlag 121 hinaus verändern kann, also nicht in das Gehäuse eindringen kann. Der Anschlag 121 lässt vorzugsweise eine Durchlassöffnung frei, die zumindest dem kleinsten Innendurchmesser des Wellrohrs 102 entspricht. Die übrigen Elemente der Anschlussarmatur 100 entsprechen denen aus Figur 1 oder 2 und werden daher an dieser Stelle nicht erneut erläutert.

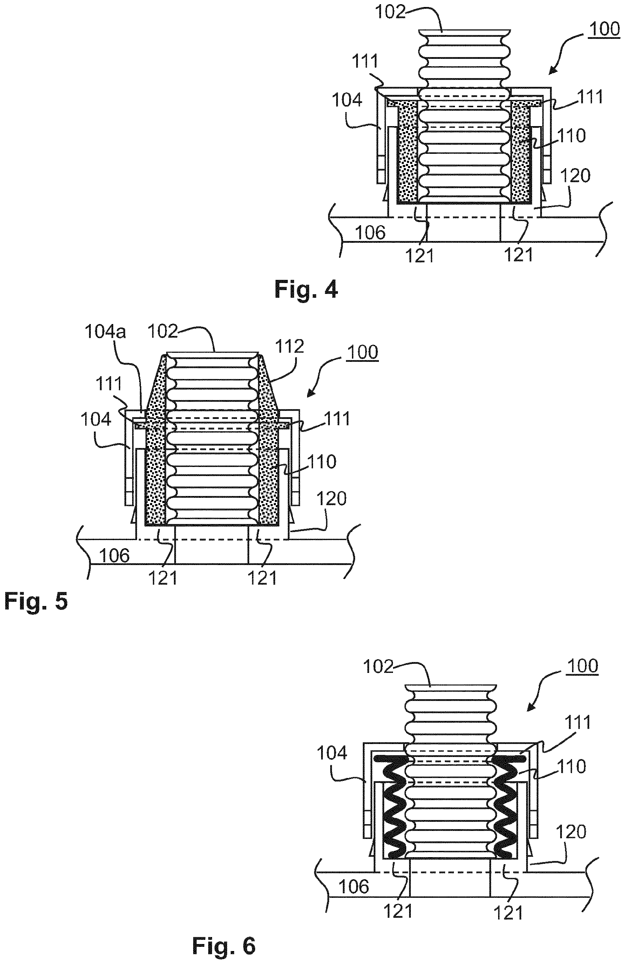

Figur 4 zeigt ein in eine Ausgestaltung der erfindungsgemäßen Anschlussarmatur 100 aufgenommenes Wellrohr 102 vor der Fixierung des Klemmkörpers 104 in einer Schnittdarstellung. Bei dieser Ausgestaltung weist Dichtkörper 110 an einer vom Ende des Wellrohres 102 abgewandten Seite einen nach außen weisenden, umlaufenden Kragen 111 auf. Die übrigen Elemente entsprechen denen der Figuren 1 und 2. Der Kragen 111 weist einen Durchmesser auf, der größer ist als der Innendurchmesser des Anschlussstutzens 120, so dass er auf dem stirnseitigen Rand des Anschlussstutzens 120 auf liegt, wenn Klemmkörper 104 zur Montage und Fixierung in Richtung Gehäusewand 106 gedrückt wird. Der Kragen 111 kann eine Dicke aufweisen, die so bemessen ist, dass der Kragen 111 bei der Montage und Fixierung des Klemmkörpers 104 ebenfalls komprimiert wird. In der Figur weist der Dichtkörper eine Länge auf die größer ist als der Abstand zwischen Anschlag 121 und der Einstecköffnung des Anschlussstutzens 120. Wenn der Dichtkörper elastisch an der Außenseite des Rohres oder Schlauchs 102 sowie an der Innenseite des Anschlussstutzens 120 anliegt kann seine Länge auch kürzer sein, so dass eine Kompression des Dichtkörpers nur im Bereich des Kragens 111 erfolgt.

Figur 5 zeigt ein in einer zweiten Ausgestaltung der erfindungsgemäßen Anschlussarmatur 100 aufgenommenes Wellrohr 102 vor der Fixierung des Klemmkörpers 104 in einer Schnittdarstellung. Bei dieser Ausgestaltung weist der Dichtkörper 110 neben dem Kragen 111 auch einen sich durch die Öffnung in der Stirnseite 104a des Klemmkörpers 104 erstreckenden Bereich 112 auf, der bspw. als Knickschutz dient. Die übrigen Elemente entsprechen denen der zuvor beschriebenen Figuren. Der Dichtkörper 110 kann dabei eine bereichsweise unterschiedliche Steifigkeit aufweisen. Z.B. können Kragen 111 und Knickschutz 112 fester bzw. steifer ausgeführt sein als der in dem Anschlussstutzen 120 aufgenommene Teil des Dichtkörpers 110, so dass sich letzterer bei der Montage und Fixierung verformt, während insbesondere der Kragen 111 in erster Linie die von Klemmkörper 104 aufgebrachte Kraft in den Dichtkörper 110 einleitet. Die größere Festigkeit bzw. Steifigkeit von Kragen 111 und Knickschutz 112 verhindert dabei, dass sich der Knickschutz bei der Montage von der Außenwand des Wellrohrs 102 ablöst. Der Knickschutz 112 kann vorzugsweise unter elastischer Spannung an der Außenwand des Wellrohrs 102 anliegen und so zusätzlich abdichten. Ein Knickschutz der mit Bezug auf diese Figur beschriebenen Art kann auch ohne Weiteres zu den im folgenden beschriebenen Dichtkörpern hinzugefügt werden.

Figur 6 zeigt ein in einer dritten Ausgestaltung der erfindungsgemäßen Anschlussarmatur 100 aufgenommenes Wellrohr 102 vor der Fixierung des Klemmkörpers 104 in einer Schnittdarstellung. Bei dieser Ausgestaltung ist Dichtkörper 110 ein Formteil, welches ebenfalls wellenförmig wechselnde Durchmesser sowie einen Kragen 111 aufweist. Die übrigen Elemente entsprechen denen der zuvor beschriebenen Figuren. Bei der Montage und Fixierung des Klemmkörpers 104 an dem Anschlussstutzen 120 wird der Dichtkörper 110 gestaucht, so dass sich die Bereiche mit dem wellenförmig wechselnden Durchmesser an die Außenseite von Wellrohr 102 und die Innenseite von Anschlussstutzen 120 anlegen bzw. anpressen und eine Reihe von Dichtebenen bilden.

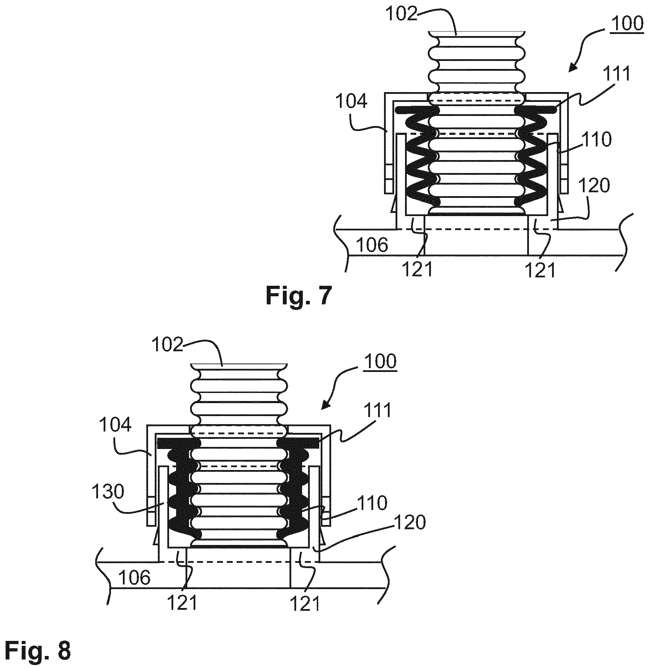

Figur 7 zeigt ein in einer vierten Ausgestaltung der erfindungsgemäßen Anschlussarmatur 100 aufgenommenes Wellrohr 102 vor der Fixierung des Klemmkörpers 104 in einer Schnittdarstellung. Bei dieser Ausgestaltung, die im Wesentlichen der in Figur 6 gezeigten entspricht, ist der Dichtkörper 110 ein Formteil, dessen wellenförmig wechselnde Durchmesser mit den wellenförmig wechselnden Durchmessern von Wellrohr 102 korrespondiert und bereits in die zwischen zwei Wellenbergen des Wellrohrs liegenden Täler eingreift, so dass eine noch bessere Abdichtung zwischen der Außenwand des Wellrohrs 102 und der Innenwand des Anschlussstutzens 120 erzielt werden kann. Der Dichtkörper 110 liegt dabei vorzugsweise unter elastischer Spannung an dem Wellrohr 102 und an der Innenwand des Anschlussstutzens 120 an. In der Figur ist dabei zu erkennen, dass das Wellrohr bei der Montage nicht gegen den Anschlag 121 stößt, sondern sich geringfügig in Richtung Gehäusewand 106 axial verschieben kann. Die radiale Abdichtung wird dabei von dem unter elastischer Spannung zwischen der Innenwand des Anschlussstutzens 120 und der Außenwand des Wellrohrs 102 liegenden Dichtkörper 110 gewährleistet. Der Kragen 111 des Dichtkörpers 110 wird zwischen dem Klemmkörper 104 und der Stirnseite des Anschlussstutzens 120 eingeklemmt und dabei komprimiert, so dass eine weitere Abdichtung erfolgt.

Figur 8 zeigt ein in einer fünften Ausgestaltung der erfindungsgemäßen Anschlussarmatur 100 aufgenommenes Wellrohr 102 vor der Fixierung des Klemmkörpers 104 in einer Schnittdarstellung. Bei dieser Ausgestaltung, die im Wesentlichen der in Figur 7 gezeigten entspricht, weist der Dichtkörper 110 mit den zwischen zwei Wellenbergen des Wellrohrs 102 liegenden Tälern korrespondierende Stege oder Lamellen 130 auf, die unter elastischer Spannung an der Außenseite des Wellrohrs 102 und der Innenseite des Anschlussstutzens 120 anliegen. Die Stege oder Lamellen 130 müssen nicht, wie in der Figur dargestellt, notwendigerweise versetzt zueinander auf der Innenseite und der Außenseite des Dichtkörpers 110 angeordnet sein. Auch bei dieser Ausgestaltung wird der Kragen 111 zwischen dem Klemmkörper 104 und der Stirnseite des Anschlussstutzens 120 eingeklemmt und dabei komprimiert, so dass eine weitere Abdichtung erfolgt.

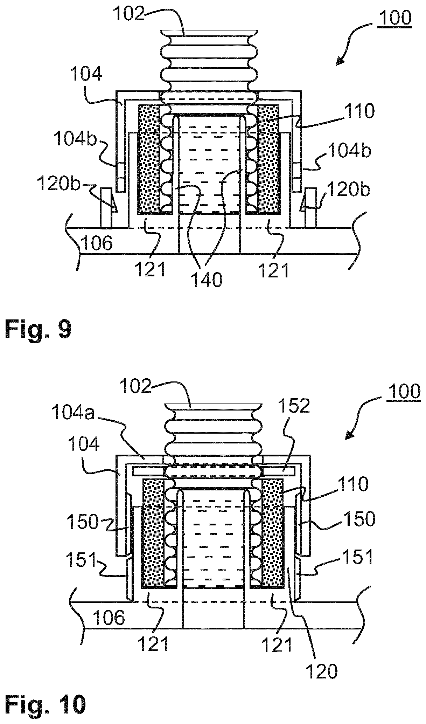

Figur 9 zeigt ein in einem dritten Beispiel einer nicht erfindungsgemäßen Anschlussarmatur 100 aufgenommenes Wellrohr 102 vor der Fixierung des Klemmkörpers 104 in einer Schnittdarstellung. Bei dieser Ausgestaltung, die in großen Teilen der in Figur 1 gezeigten entspricht, ist in dem Anschlussstutzen 120 ein weiterer Stutzen 140 angeordnet, über den das Rohr bzw. der Schlauch 102 gesteckt wird. Der weitere Stutzen 140 kann das in dem Anschlussstutzen 120 aufgenommene Rohr oder den Schlauch 102 radial verstärken, so dass ein aufgrund axialer Verformung gegen die Außenseite drückender Dichtkörper 110 das Rohr oder den Schlauch 102 nicht zusammendrückt. Außerdem kann bei ungleichmäßiger Verformung des Dichtkörpers 110 das in dem Anschlussstutzen aufgenommene Rohr oder der Schlauch 102 nicht seitlich gegenüber der Durchlassöffnung versetzt werden.

In Figur 9 sind außerdem die in Öffnungen 104b des Klemmkörpers 104 eingreifenden Rastnasen 120b nicht außen am Anschlussstutzen 120 angeordnet, sondern separat an der Gehäusewand 106. Zum Lösen des Klemmkörpers 104 aus einer Montageendlage muss bei dieser Ausführung der Klemmkörper 104 nach innen bzw. zusammen gedrückt werden, während er bei den in den anderen Figuren gezeigten Ausgestaltungen nach außen gezogen werden muss.

Figur 10 zeigt ein in einem vierten Beispiel einer nicht erfindungsgemäßen Anschlussarmatur 100 aufgenommenes Wellrohr 102 vor der Fixierung des Klemmkörpers 104 in einer Schnittdarstellung. Bei dieser Ausgestaltung wird Klemmkörper 104 nicht mit Rastverbindungen fixiert, sondern durch Verschrauben. Dazu ist an der Innenseite des Klemmkörpers 104 ein Innengewinde 150 vorgesehen, das mit einem am Anschlussstutzen 120 angeordneten Außengewinde 151 verschraubbar ist. Außerdem ist eine Lochscheibe 152 zwischen der Stirnseite 104a des Klemmkörpers 104 und dem Dichtkörper 110 angeordnet, welche die Drehbewegung des Klemmkörpers 104 aufnehmen kann, so dass der Dichtkörper 110 bei der Montage nicht oder nur wenig tordiert wird. In Figur 10 ist außerdem wieder ein innerer Stutzen 140 gezeigt, der bereits mit Bezug auf Figur 9 beschrieben wurde.

Wenngleich der Klemmkörper 104 der Anschlussarmatur 100 in den Figuren 1 bis 9 durchgängig mit einer Rastvorrichtung zur Fixierung dargestellt ist, ist für den Fachmann leicht erkennbar, dass eine Fixierung des Klemmteils 104 an dem Anschlussstutzen 120 auch bei den in diesen Figuren gezeigten Ausgestaltungen des Dichtkörpers durch Verschrauben oder mittels eines Bajonettverschlusses möglich ist, ohne von dem Grundprinzip abzuweichen.

Die Fixierung des Wellrohrs in dem Anschlussstutzen durch in die Wellentäler eingreifende Teile des Dichtkörpers und Fixierung des Dichtkörpers durch den Klemmkörper ist bei allen in den Figuren gezeigten Ausgestaltungen gleichermaßen gegeben.

### Bezuaszeichenliste

- 100: Anschlussarmatur
- 102: Rohr / Schlauch
- 104: Klemmkörper
- 104a: Stirnseite
- 104b: Öffnung
- 106: Gehäusewand
- 110: Dichtkörper
- 111: Kragen
- 112: Knickschutz
- 120: Anschlussstutzen
- 120b: Rastnase
- 121: Anschlag
- 130: Steg / Lamelle (PA3, 4)
- 140: innerer Stutzen (PA12)
- 150: Innengewinde
- 151: Außengewinde
- 152: Lochscheibe

## Patentansprüche

1. Anschlussarmatur (100) zur lösbaren Befestigung eines Rohres oder Schlauchs (102) mit zumindest in einem in der Anschlussarmatur (100) aufnehmbaren Endbereich wellenförmig wechselndem Durchmesser (D1, D2) umfassend:
- einen elastisch verformbaren, sich axial über zwei oder mehr Wellen des Endbereichs erstreckbaren Dichtkörper (110), der den Endbereich des Rohres oder Schlauchs (102) radial umschließen kann,
- einen Anschlussstutzen (120) mit einem von einer Wand umschlossenen Kernhohlraum mit einer Einstecköffnung zur Aufnahme eines Endes des Rohres oder Schlauchs (102) und des über den Endbereich des Rohres oder Schlauchs (102) schiebbaren Dichtkörpers (110) und einer der Einstecköffnung gegenüberliegenden Durchlassöffnung, und
- einem den Anschlussstutzen (120) außen übergreifenden und an dem Anschlussstutzen (120) in einer Montageendlage fixierbaren Klemmkörper (104), wobei der Klemmkörper (104) einen in einer quer zu einer Längsachse des in dem Anschlussstutzen (120) aufnehmbaren Rohres oder Schlauchs (102) liegenden Bereich (104a) aufweist, durch den das Rohr oder der Schlauch durchführbar ist und der zumindest einen Teil des Dichtkörpers (110) im montierten Zustand in axialer Richtung staucht und/oder komprimiert,
wobei der Dichtkörper (110) elastisch zumindest an der Außenseite des Rohres oder Schlauchs (102) anliegen kann, **dadurch gekennzeichnet, dass** an einer von dem Ende (105) des Rohres oder Schlauchs (102) abgewandten Seite einen nach außen weisenden Kragen (111) aufweist, und dass der zumindest eine im montierten Zustand axial gestauchte und/oder komprimierte Teil des Dichtkörpers den Kragen (111) umfasst.

2. Anschlussarmatur (100) nach Anspruch 1, wobei der Dichtkörper (110) zumindest auf seiner Innenseite mit den Wellen (106) des Rohres oder Schlauchs (102) korrespondierende radial umlaufende Stege oder Lamellen (130) aufweist.

3. Anschlussarmatur (100) nach Anspruch 1 oder 2, wobei der Dichtkörper (110) auf seiner Außenseite radial umlaufende Stege oder Lamellen (130) aufweist.

4. Anschlussarmatur (100) nach Anspruch 1, wobei der Dichtkörper (110) ziehharmonikaartig ausgebildet ist und zumindest über einen Teil seiner axialen Länge wellenförmig wechselnde Durchmesser aufweist.

5. Anschlussarmatur (100) nach Anspruch 1, 3, oder 4, wobei der Dichtkörper an das Rohr oder den Schlauch anspritzbar oder auf das Rohr oder den Schlauch aufschiebbar ist.

6. Anschlussarmatur (100) nach einem der vorhergehenden Ansprüche, wobei der Anschlussstutzen (120) einen innen umlaufenden Anschlag (121) aufweist, an dem zumindest der das Rohr oder den Schlauch (102) umschließende Dichtkörper (110) anstößt.

7. Anschlussarmatur (100) nach Anspruch 6, wobei der Dichtkörper (110) in einem ungestauchten Zustand länger ist als der Abstand zwischen dem Anschlag (121) und dem an der Einstecköffnung liegenden Ende des Anschlussstutzens (120).

8. Anschlussarmatur (100) nach einem der vorhergehenden Ansprüche, wobei an dem quer zu einer Längsachse des in dem Anschlussstutzen (120) aufnehmbaren Rohres oder Schlauchs (102) liegenden Bereich (104a) des Klemmkörpers (104) im Inneren eine Lochscheibe (152) frei drehbar angeordnet ist, durch die das Rohr oder der Schlauch (102) hindurchführbar ist, und deren Außendurchmesser mit dem Außendurchmesser des Anschlussstutzens (120) korrespondiert.

9. Anschlussarmatur (100) nach Anspruch 8, wobei die Lochscheibe (152) aus einem Material besteht oder mit einem Material beschichtet ist, das einen geringeren Reibwiderstandskoeffizienten aufweist als das Material des Klemmkörpers (104).

10. Anschlussarmatur (100) nach einem der vorhergehenden Ansprüche, wobei im Inneren des Anschlussstutzens (120) ein weiterer, an beiden Enden offener Stutzen (140) angeordnet ist, der in einem in der Anschlussarmatur (100) aufnehmbaren Rohr oder Schlauch (102) aufgenommen ist.

11. Anschlussarmatur (100) nach einem der vorhergehenden Ansprüche, wobei der Klemmkörper (104) zwei oder mehr entlang des Umfangs des Anschlussstutzens gleichmäßig verteilte Schenkel aufweist, welche den Anschlussstutzen (120) übergreifen, und welche an dem Anschlussstutzen (120) oder an einem Gehäuseteil fixierbar sind, an dem der Anschlussstutzen (120) angeordnet ist.

12. Anschlussarmatur (100) nach einem der vorhergehenden Ansprüche, wobei der Klemmkörper (104) mittels einer oder mehrerer Rastverbindungen (104b, 120b) in einer Montageendlage fixiert ist.

13. Anschlussarmatur (100) nach einem der vorhergehenden Ansprüche 1 - 10, wobei der Klemmkörper (104) mittels eines Bajonettverschlusses in der Montageendlage fixiert ist.

14. Anschlussarmatur (100) nach einem der vorhergehenden Ansprüche 1 - 10, wobei der Klemmkörper (104) ein innenliegendes Gewinde (150) aufweist, das mit einem Außengewinde (151) des Anschlussstutzens (120) korrespondiert.

15. Anschlussarmatur (100) nach Anspruch 14, wobei der Klemmkörper (104) mittels segmentweise unterbrochenen Gewinden auf der Außenseite des Anschlussstutzens (120) und der Innenseite des Klemmkörpers (104) fixiert ist, welche bei Ausrichtung von gewindefreien Segmenten des Anschlussstutzens (120) mit Gewindesegmenten des Klemmkörpers (104) ein Aufschieben des Klemmkörpers (104) in axialer Richtung ermöglichen, und die bei einer Drehung des Klemmkörpers (104) eine Fixierung bewirken.

## Claims

1. A connection fitting (100) for the detachable fastening of a pipe or hose (102) having a diameter (D1, D2) which changes in a wave-shaped manner at least in an end region which can be accommodated in the connection fitting (100) comprising:
- an elastically deformable sealing body (110) extendable axially over two or more corrugations of the end region, which sealing body can radially surround the end region of the pipe or hose (102),
- a connecting piece (120) with a core cavity surrounded by a wall having an insertion opening for accommodating an end of the pipe or hose (102) and the sealing body (110) that is slidable over the end region of the pipe or hose (102) and a through-opening opposite the insertion opening, and
- a clamping body (104) that overlaps the outside of the connecting piece (120) and can be fixed to the connecting piece (120) in the assembly end position, wherein the clamping body (104) has a region (104a) which lies transversely to a longitudinal axis of the pipe or hose (102) that can be accommodated in the connecting piece (120), through which region the pipe or the hose can be passed and which compresses and/or compacts at least one part of the sealing body (110) in the assembled state in the axial direction,
wherein the sealing body (110) can elastically abut at least against the outside of the pipe or hose (102), **characterized in that** on a side facing away from the end (105) of the pipe or hose (102) it has an outwardly facing collar (111), and **in that** the at least one part of the sealing body axially compacted and/or compressed in the assembled state comprises the collar (111).

2. The connection fitting (100) according to claim 1, wherein the sealing body (110) at least on its inside has radially circumferential webs or lamellae (130) corresponding to the corrugations (106) of the pipe or hose (102).

3. The connection fitting (100) according to claim 1 or 2, wherein the sealing body (110) has radially circumferential webs or lamellae (130) on its outside.

4. The connection fitting (100) according to claim 1, wherein the sealing body (110) is designed like an accordion and has a diameter which changes in a wave-shaped manner over at least part of its axial length.

5. The connection fitting (100) according to claim 1, 3, or 4, wherein the sealing body can be injection-molded onto the pipe or hose or can be slid onto the pipe or the hose.

6. The connection fitting (100) according to any one of the preceding claims, wherein the connecting piece (120) has an inner circumferential end stop (121), against which at least the sealing body (110) surrounding the pipe or the hose (102) abuts.

7. The connection fitting (100) according to claim 6, wherein the sealing body (110) in an uncompressed state is longer than the distance between the end stop (121) and the end of the connecting piece (120) lying at the insertion opening.

8. The connection fitting (100) according to any one of the preceding claims, wherein a perforated disk (152) is freely rotatably arranged in the interior on the region (104a) of the clamping body (104) which lies transversely to a longitudinal axis of the pipe or hose (102) that can be accommodated in the connecting piece (120), through which the pipe or hose (102) can be passed, and its outer diameter corresponds with the outer diameter of the connecting piece (120).

9. The connection fitting (100) according to claim 8, wherein the perforated disk (152) consists of a material or is coated with a material that has a lower coefficient of frictional resistance than the material of the clamping body (104).

10. The connection fitting (100) according to any one of the preceding claims, wherein inside the connecting piece (120) another connecting piece (140) open at both ends is arranged, which is accommodated in the pipe or hose (102) that can be accommodated in the connection fitting (100).

11. The connection fitting (100) according to any one of the preceding claims, wherein the clamping body (104) has two or more legs evenly distributed along the circumference of the connecting piece, which overlap the connecting piece (120), and which can be fixed to the connecting piece (120) or to a housing part on which the connecting piece (120) is arranged.

12. The connection fitting (100) according to any one of the preceding claims, wherein the clamping body (104) is fixed in an assembly end position by means of one or more snap-in connections (104b, 120b).

13. The connection fitting (100) according to any one of the preceding claims 1-10, wherein the clamping body (104) is fixed in the assembly end position by means of a bayonet lock.

14. The connection fitting (100) according to any one of the preceding claims 1-10, wherein the clamping body (104) has an internal thread (150), which corresponds to an external thread (151) of the connecting piece (120).

15. The connection fitting (100) according to claim 14, wherein the clamping body (104) is fixed by means of threads interrupted in segments on the outside of the connecting piece (120) and the inside of the clamping body (104), which when aligning thread-free segments of the connecting piece (120) with threaded segments of the clamping body (104) allow the clamping body (104) to be slid on in the axial direction, and bring about a fixation when the clamping body (104) is rotated.

## Revendications

1. Armature de raccordement (100) pour la fixation amovible d'un tube ou d'un tuyau (102), avec au moins un diamètre (D1, D2) variant avec des ondulations dans une zone d'extrémité pouvant être logée dans l'armature de raccordement (100), comprenant :
- un corps d'étanchéité (110) déformable élastiquement, pouvant s'étendre axialement sur deux ondulations ou plus de la zone d'extrémité, qui peut entourer la zone d'extrémité du tube ou du tuyau (102) de manière radiale,
- un embout de raccordement (120) avec un espace creux central avec une ouverture d'enfichage pour le logement d'une extrémité du tube ou du tuyau (102) et du corps d'étanchéité (110) pouvant être coulissé sur la zone d'extrémité du tube ou du tuyau (102) et une ouverture de passage opposée à l'ouverture d'enfichage et
- un corps de serrage (104) entourant à l'extérieur l'embout de raccordement (120) et pouvant être fixé à l'embout de raccordement (120) dans une position finale de montage, dans lequel le corps de serrage (104) présente une zone (104a) transversale par rapport à un axe longitudinal du tube ou du tuyau (102) pouvant être logé dans l'embout de raccordement (120), à travers laquelle le tube ou le tuyau peut être passé et qui refoule et/ou comprime, dans l'état monté, l'au moins une partie du corps d'étanchéité (110) dans la direction axiale,
dans lequel le corps d'étanchéité (110) peut s'appuyer de manière élastique au moins sur la face externe du tube ou du tuyau (102),
**caractérisé en ce que**, sur un côté opposé à l'extrémité (105) du tube ou du tuyau (102), il présente un col (111) orienté vers l'extérieur et **en ce que** l'au moins une partie refoulée et/ou comprimée axialement, dans l'état monté, du corps d'étanchéité, comprend le col (111).

2. Armature de raccordement (100) selon la revendication 1, dans lequel le corps d'étanchéité (110) comprend, au moins sur sa face interne, des nervures ou des lamelles (130) à extension radiale, correspondant aux ondulations (106) du tube ou du tuyau (102).

3. Armature de raccordement (100) selon la revendication 1 ou 2, dans lequel le corps d'étanchéité (110) comprend, sur sa face externe, des nervures ou lamelles (130) s'étendant radialement.

4. Armature de raccordement (100) selon la revendication 1, dans lequel le corps d'étanchéité (110) est conçu à la manière d'un accordéon et présente des diamètres variables, avec des ondulations, au moins sur une partie de sa longueur axiale.

5. Armature de raccordement (100) selon la revendication 1, 3 ou 4, dans lequel le corps d'étanchéité peut être moulé par injection sur le tube ou sur le tuyau ou bien être emboîté sur le tube ou le tuyau.

6. Armature de raccordement (100) selon l'une des revendications précédentes, dans lequel l'embout de raccordement (120) comprend une butée (121) à extension interne, contre laquelle s'appuie au moins le corps d'étanchéité (110) entourant le tube ou le tuyau (102).

7. Armature de raccordement (100) selon la revendication 6, dans lequel le corps d'étanchéité (110) est, dans un état non comprimé, plus long que la distance entre la butée (121) et l'extrémité de l'embout de raccordement (120) se trouvant au niveau de l'ouverture d'enfichage.

8. Armature de raccordement (100) selon l'une des revendications précédentes, dans lequel, au niveau de la zone (104a) du corps de serrage (104), transversale par rapport à axe longitudinal du tube ou tuyau (102) pouvant être logé dans l'embout de raccordement (120), est disposé, à l'intérieur, un disque perforé (152), de manière librement rotative, à travers lequel le tube ou tuyau (102) peut être passé et dont le diamètre extérieur correspond au diamètre extérieur de l'embout de raccordement (120).

9. Armature de raccordement (100) selon la revendication 8, dans lequel le disque perforé (152) est constitué d'un matériau ou est revêtu d'un matériau qui présente un coefficient de résistance au frottement plus faible que le matériau du corps de serrage (104).

10. Armature de raccordement (100) selon l'une des revendications précédentes, dans lequel, à l'intérieur de l'embout de raccordement (120), est disposé un autre embout (140) ouvert aux deux extrémités, qui est logé dans un tube ou tuyau (102) pouvant être logé dans l'armature de raccordement (100).

11. Armature de raccordement (100) selon l'une des revendications précédentes, dans lequel le corps de serrage (104) comprend deux branches ou plus, réparties uniformément le long de la circonférence de l'embout de raccordement, qui entourent l'embout de raccordement (120) et qui peuvent être fixées à l'embout de raccordement (120) ou à une partie de boîtier au niveau de laquelle l'embout de raccordement (120) est disposé.

12. Armature de raccordement (100) selon l'une des revendications précédentes, dans lequel le corps de serrage (104) est fixé dans une position finale de montage au moyen d'une ou plusieurs liaisons par encliquetage (104b, 120b).

13. Armature de raccordement (100) selon l'une des revendications 1 - 10, dans lequel le corps de serrage (104) est fixé dans la position finale de montage au moyen d'un verrouillage par baïonnette.

14. Armature de raccordement (100) selon l'une des revendications 1 - 10, dans lequel le corps de serrage (104) présente un filetage interne (150) qui correspond à un filetage externe (151) de l'embout de raccordement (120).

15. Armature de raccordement (100) selon la revendication 14, dans lequel le corps de serrage (104) est fixé au moyen de filetages interrompus par segments sur la face externe de l'embout de raccordement (120) et la face interne du corps de serrage (104), qui, lors d'une orientation de segments sans filetage de l'embout de raccordement (120) avec des segments à filetage du corps de serrage (104), permettent un emboîtement du corps de serrage (104) dans la direction axiale et qui provoquent une fixation lors d'une rotation du corps de serrage (104).
